# EUROPEAN PATENT APPLICATION

(11) **EP 4 700 763 A1**
(43) Date of publication of application: **25.02.2026**
(21) Application number: 24000099.2
(22) Date of filing: 19.08.2024
(51) Int. Cl.: G10K 11/162, B32B 5/18, C04B 38/02, G10K 11/168

(54) **SUB-WAVELENGTH SOUND ABSORBING SYSTEM**

(71) Applicant: DeCavis AG, 8600 Dübendorf (CH); EMPA Eidgenössische Materialprüfungs- und Forschungsanstalt, 8600 Dübendorf (CH)
(72) Inventor: Sturzenegger, Philip N., 8600 Dübendorf (CH); Gonzenbach, Urs T., 8600 Dübendorf (CH); VanDamme, Bart, 8600 Dübendorf (CH); Cavalieri, Théo, 8600 Dübendorf (CH)
(74) Representative: Witz, Michael

(57) **Abstract**

The present invention suggests a non-combustible, rigid sound absorbing system with a first layer comprising a perforated inorganic closed-cell foam. Moreover, it suggests a process for the manufacturing of a layer comprising a perforated inorganic closed-cell foam. Finally, it suggests the use of a layer comprising a perforated inorganic closed-cell foam for sound absorption.

## Description

The present invention relates to a non-combustible, thin, rigid sound absorbing system with a first layer comprising a perforated inorganic closed-cell foam. Moreover, it relates to a process for the manufacturing of a layer comprising a perforated inorganic closed-cell foam. Finally, it relates to the use of a layer comprising a perforated inorganic closed-cell foam for sound absorption.

Room acoustics depend greatly on architectural parameters. The variables that determine room acoustics can be influenced to a greater or lesser extent via appropriate room design. An important objective in room acoustics, alongside simple noise reduction, is to adapt the acoustic properties of a room to its intended purpose. Acoustic fields in rooms are diffuse, unlike those in the external world, because they are generated by direct and reflected sound. They can be controlled via appropriate acoustic power reduction. Technical sound absorbers are used here which permit targeted absorption and reflection.

In principle, it is possible to divide technical absorbers into two groups based on their mode of operation, namely into resonators and porous absorbers. The mode of operation of resonators very generally involves systems which have a pronounced sound absorption maximum. Examples of these sound absorbers are Helmholtz resonators and membrane absorbers.

In contrast to this, porous absorbers (or fibrous materials) primarily absorb acoustic energy via friction inside the microstructure, where it is converted into thermal energy. This generally requires an open-pore structure with adequate porosity. Because sound absorption is achieved primarily via dissipation, the sound absorption spectrum of porous sound absorbers is significantly different from that of resonators. In the ideal case here, the frequency dependent sound absorption coefficient rises constantly towards higher frequencies in the shape of an "S" and asymptotically approaches a maximum. Porous absorbers can have various structures. Many different materials can be used here.

Foams are generally two-phase systems where one phase is gaseous and the other is solid or liquid. The gaseous phase consists of gas bubbles delimited by solid or liquid cell walls. The cell walls meet one another on lines and at nodes and thus form a framework.

Foams with sound-absorbing properties are generally open-cell foams. The partitions between the delimiting walls are disrupted at least to some extent, and there is at least some connection between the cells. The material thus acts as porous absorber. A broad variety of different materials are used for the cell walls in open-cell foams. They range from metals by way of inorganic materials as far as organopolymers, which are nowadays applied to these. One disadvantage of organopolymers is their typically high flammability and, in case of heat or fire, the production of toxic fumes and smokes. A further disadvantage is that many of the organopolymeric foams release health hazardous substances like the widely used melamine foams that release formaldehyde fumes.

Organopolymer foams are divided, based on their rigidity, into flexible and rigid foams. Formation of bubbles in these is mostly achieved by way of a blowing gas which is produced in situ via a chemical reaction, or by way of a chemical compound which is dissolved in the organic matrix and which, at low temperatures, boils or decomposes to give gaseous products. Foams can also be produced via mechanical mixing to incorporate gases, via polymerization in solution with phase separation, or via use of fillers which are dissolved out of the material after the curing process.

EP 1 020 846 A2 discloses a sound absorbing structure comprising at least one porous member including a plurality of holes, and the holes are at least one kind of through holes and non-through holes. Preferably a plurality of porous members are stacked. It is also preferable that the holes of porous members are formed as diameter varied holes, and an area of opening of each diameter varied hole formed in the surface opposite to a sound source is largest and the area of opening of each of the diameter-varied holes is reduced in a direction of the thickness of the porous member. Moreover, it is also preferable that the sound absorbing structure further comprises a coating film formed on at least a surface of the porous member which is opposite to a sound source wherein the holes penetrate the coating film and the porous member. The porous member preferably includes a structure formed by mixing open-cells and closed-cells. Only polymers are mentioned as the materials of the porous member. Moreover, it is indicated that the polymer must be soft enough to absorb sound without perforations. In the examples, through holes are mentioned having diameters of 5 mm or more. In contrast thereto, the present invention relies on microperforated closed-cell rigid non-combustible inorganic materials with excellent sound absorption.

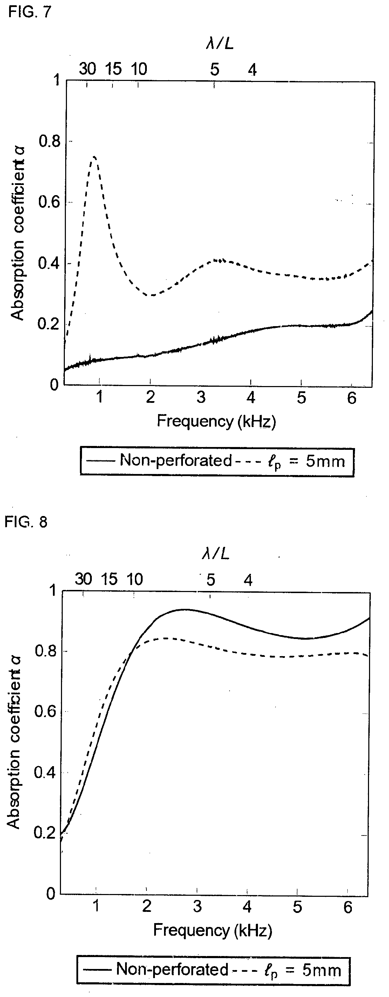

WO 2018/154864 A1 discloses a thin, lightweight sound-absorbing material that has excellent low-frequency sound absorption. This sound-absorbing material has a laminate structure that includes, in order, a first perforated non-porous layer, a first porous layer, a second perforated non-porous layer, and a second porous layer. The first perforated layer (which is not a foam) has a plurality of thickness-direction through holes. The second perforated layer has a plurality of thickness-direction through holes. The thickness of the first perforated layer is less than 1 mm (i.e., it should be a perforated thin polymer membrane). According to Figs. 7 and 8, absorption maxima below ~ 500 Hz can be achieved (Helmholtz resonator). In turn, there is an absorption minimum at ~ 1000 Hz. In contrast thereto, the system according to the present invention exhibits a more balanced, sub-wavelength absorption spectrum. The system according to the present invention only requires one base material, not a combination of materials for sheets and foams.

WO 2021/064129 A1 discloses a sound absorber for a transport-route noise-protection barrier, wherein the sound absorber comprises at least one foamed plastic panel. According to the invention, a first surface of the foamed plastic panel has a predefinable number of sound absorber recesses for establishing an absorption performance with a predefinable frequency response, each of said sound absorber recesses extending only through part of the thickness of the foamed plastic panel. In contrast thereto, the present invention relies on perforated (through holes) inorganic non-combustible closed cell foams.

WO 2012/156416 A1 discloses a method of producing a composite foam structure comprising the steps of perforating at least two foam structures by a method of perforating a foam structure comprising the steps of: perforating the foam structure so as to form at least one first channel that extends fully through the foam structure; and perforating the foam structure so as to form at least one second channel that extends only partly through the foam structure; and laminating a perforated surface of one of the at least two foam structure to a perforated surface of another of the at least two foam structures. Only polymer foams are mentioned in this document. The present invention, in contrast, utilizes at least one first layer having perforations that extend fully through the foam structure and optionally further perforated or non-perforated layers. Moreover and foremost, the foam according to the present invention is inorganic and thus non-combustible. Furthermore, the foams according to the present invention are acoustically rigid.

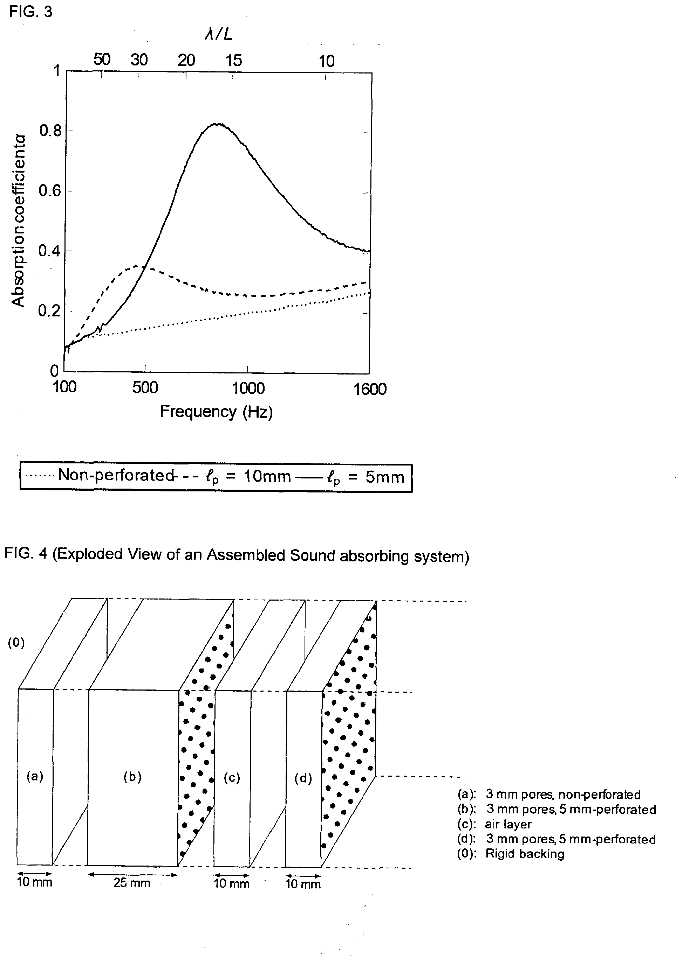

US 5962107 A discloses that a cellular material, preferably a low-density foam material, having an initial average normal incidence sound absorption coefficient for a selected frequency range is perforated to form a perforated cellular sound absorption material. The perforated cellular sound absorption material formed has an average normal incidence sound absorption coefficient for the selected frequency range greater than the initial average normal incidence sound absorption coefficient of the cellular sound absorption material. The perforations must be rather large to reach low frequency absorption (Figs. 4 & 7 show that a 400 Hz absorption maximum can be reached with about 5 mm perforations). Only cellular polymer foams are disclosed in this document. It must be assumed that the materials are open-cell materials because non-perforated closed-cell materials do not possess inherent sound absorbing qualities.

US 1554179 A discloses a sound deadening construction, comprising a layer of material which has sound absorbing characteristics, and having therein independent artificial openings extending inwardly from a surface of said material, whereby sound waves reaching said surface will be absorbed. The sound absorbing construction comprises a layer of material having sound absorbing qualities provided with independent perforations of substantially five-eighths of an inch in diameter (15,9 mm, i.e., a macro-perforation) extending inwardly from a surface of said material, whereby sound waves lying in the pitch between the notes C¹ and C⁷ of the musical scale will be absorbed. It must be assumed that the material is an open-cell material because non-perforated closed-cell materials do not possess inherent sound absorbing qualities. Moreover, this reference explicitly teaches that the pore size is not relevant for the effect that is obtained. The actual coefficient of absorption (α) is not indicated. In contrast thereto, the present invention relies on microperforated closed-cell materials with excellent sub-wavelength sound absorption over a wide range of frequencies.

However, organopolymer foams have certain disadvantages. They are in principle combustible and can melt upon contact with fire. They can emit toxic vapors such as formaldehyde, solvents or even smoke gases upon combustion. Organopolymers are based on mineral oil products and are notoriously difficult to recycle. In contrast thereto, inorganic foams are non-combustible, they do not melt, do not emit toxic vapors and they are much easier to recycle.

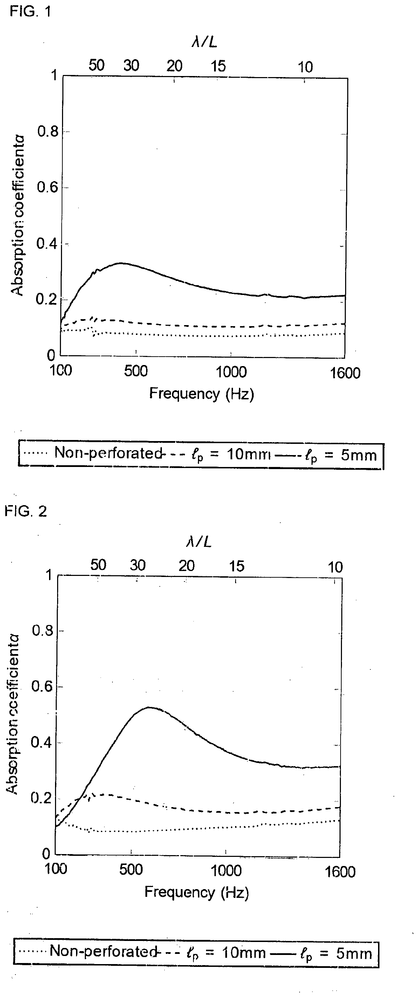

US 2016/0244366 A1 describes a geopolymer foam formulation for a non-combustible, sound absorbing geopolymer foam element. According to Fig. 2, the absorber comprises an open-cell foam structure. In contrast thereto, the system according to the present invention involves a perforated closed-cell foam.

EP 1340736 A1 discloses a heat resistant porous sound-absorbing material for a jet engine. According to Figs. 4 and 5, it comprises an open-cell structure. According to Figs. 6B and 8B, the sound absorption has an absorption coefficient α ≥ 0.5 only in the frequency range above ~ 1000 Hz. In contrast thereto, the system according to the present invention involves a perforated inorganic closed-cell foam with a broadband sub-wavelength sound absorption.

US 2020/0175954 A1 discloses a soundproof structure comprising a film-shaped member having a plurality of through-holes penetrating in a thickness direction, wherein a hole radius distribution histogram function obeys a certain mathematical formula. However, the thickness of the film-shaped member is 0.1 mm or less, i.e., it is a thin membrane without any porosity. Metals are the preferred materials for said film-shaped member [0188].

US 1804884 A discloses a building element of stone, stone composition or other suitable hard substance or composition providing a permanent depressed or indented surface structure incapable of being deformed, the depressions or indentations having a definite predetermined coefficient of absorption. There is, however, no indication in this document as to whether the inorganic material is a perforated inorganic closed-cell foam.

JPH08218512A describes a lightweight sound-absorbing concrete unit and a sound absorption/insulation panel made therefrom. The purpose is to improve sound absorptivity while ensuring lightness and durability by a method wherein lightweight aggregates are used with apparent porosity and entire bulk density, and panel units are made of aggregates in different grain sizes by layering such aggregates in layers. Porosity is thus based on the pores between the lightweight aggregates. Such pores have an open-cell structure. No perforations are applied. The individual units are not tunable after their fabrication. In contrast thereto, the layers of the sound absorbing system according to the present invention are tunable by applying appropriate perforations.

The technical problems underlying the present invention were to provide a non-combustible, rigid, thin, preferably sub-wavelength sound absorbing system. It should preferably be adjustable to the desired frequency range and exhibit excellent sub-wavelength sound absorption over a wide range of frequencies. The absorption coefficient should be greater than 0.5, preferably greater than 0.8, in the desired frequency range.

The following definitions are relevant in connection with the present invention. The term **"about",** in connection with a measurable unit refers to normal deviations of said measurable unit. Such deviations depend on the precision of the measuring apparatus, or they depend on statistical deviations that are expected by the skilled person. It is to be understood that the term "about" means a deviation of ± 15 %, preferably ± 10 %, more preferably ± 5 %.

The term **"wt.-%"** refers to the ratio of the mass of the respective component in relation to the sum of the mass of all components including water, in percent, if not stated otherwise. The term vol.-% refers to the ratio of the volume of the respective component in relation to the sum of the volume of all components in percent.

The meaning of the term **"comprising"** is to be interpreted as encompassing all the specifically mentioned features as well as optional, additional, unspecified ones, whereas the term **"consisting of"** only includes those features as specified. It is intended that the term comprising can be narrowed down to consisting of, if necessary. It is moreover intended that in each actual case the sum of all percentages of the specified and unspecified constituents of the formulation of the invention is 100% or may mathematically be adjusted to 100%, if necessary.

The absorption coefficient **"α**" is the ratio of the absorbed sound energy with respect to the incident sound energy, measured in an impedance tube setup according to ISO 10534-2. It is equal to 1 if none of the incident sound energy is reflected. The diffuse absorption coefficient is named "**α_{dif}**". It is defined according to standard ISO354:2003. Values of greater than 1.0 are possible and are generally accepted in the field. Moreover, "**α_{w}**" is the calculated single absorption value according to ISO 11654.

The frequency of a sound wave "**f**" is indicated in Hz while the wavelength "**λ**" is indicated in m, related by **c_{L}** =f **λ**. Incidentally, the speed of sound in air "**c_{L}**" is 340 m/s.

The thickness of a single absorber layer, "**d_{A}**", and the total thickness of the sound absorbing system, "L", are given in mm. The respective relative thickness of a layer or of the whole absorbing system is expressed as a fraction of the sound wavelength, for instance "**λ/4**" or "A/10" as will be explained hereinbelow in further detail.

The diameter of an individual perforation, "**d**_{P}", is indicated in mm and corresponds to the diameter of a perforation needle in case needles are used to apply the perforations. The distance between perforations "**I_{P}**" is given in mm. This means the closest spacing between two adjacent perforations.

The apparent density of a foam, "d", is given in g/mL. This term refers to the volume of the total foam body including the pore volume. The "**total porosity**" of a foam, "**p**", is given in vol%. This term is defined according to the equation: p = (1 - d/dₘ) - 100 vol% where "**dₘ**" is the density of the foam excluding the pore volume.

The term "median pore size **d₅₀**" (of the macropores as will be defined hereinbelow) is given in mm. The median pore size value of a foam is determined by optical image analysis. Cross-sectional images of pore structures are analyzed by the linear intercept method using the software Linear Intercept (TU, Darmstadt, Germany). A given **d₅₀** value means that 50% of the pores are smaller than or equal to that value. A "**d₁₀**"-value, for instance, means that 10% of the pores are smaller than or equal to that value and a "**d₉₀**"-value means that 90% of the pores are smaller than or equal to that value. The span of the (macro)pore size distribution, "**S**ₚ" is defined by the following equation: Sₚ = (d₉₀ - d₁₀)/d₅₀.

Likewise, the term "median particle size **d₅₀**" is also given in mm and refers to the diameter of a particle size distribution compared to which 50% of the particles have an equal or smaller diameter.

The static air flow resistivity, "**σ**" is given in (Pa_{*}s/m²) and measured according to ISO 9053-1.

The above-mentioned problems were solved with the technical features of the independent claims. The dependent claims pertain to preferred embodiments.

According to a first aspect, the present invention provides a non-combustible, thin, rigid sound absorbing system, characterized in that a first layer of this system comprises a perforated inorganic closed-cell foam.

The term "**sound absorbing system**" as used throughout the present specification refers to a device comprising one or several layers of materials or gaps, respectively, each of which contribute to the overall sound absorption. The first layer thereof must be a perforated inorganic closed-cell foam. The term "**a first layer**" or "**the first layer**", respectively, refers to the layer of the sound absorbing system that is closest to the source of sound, i.e., first encountered by the incident sound wave.

The term "**non-combustible**" as used throughout the present specification means that the respective system exhibits a flammability class according to DIN 4102 of at least A2, preferably A1.

The term "**rigid**" as used throughout the present specification means acoustically rigid or non-poroelastic, i.e., the foam pores are not deformed by the acoustic waves (for poroelasticity in general see Propagation of Sound in Porous Media: Modelling Sound Absorbing Materials, Second Edition, Jean F. Allard (Université le Mans, France), Noureddine Atalla (Université de Sher-brooke, Qc, Canada), Chapter 6).

**"Perforated",** as this term is used throughout the specification, means that the closed-cell foam comprises a plurality of thickness-direction holes through the entire thickness (i.e. "through holes"), or blind holes. If the holes are not through holes, the whole system is acoustically equivalent to a two-layer assembly with a first layer comprising through holes and a second non-perforated layer.

As mentioned above, a "**foam**" is a two-phase system where one phase is gaseous, and the other one is solid or liquid. The gaseous phase consists of gas bubbles delimited by solid or liquid cell walls. The cell walls meet one another on lines and at nodes and thus form a framework.

"**Macropores**", as this term is used in this manuscript, are the pores in the foam that originate from the action of a blowing agent or from generating air or gas bubbles by injecting a gas or frothing a foamable suspension. The macropores exhibit median pore sizes > 0.030 mm and can typically be characterized by light microscopic image analysis.

"**Micropores**", as this term is used throughout the present specification, refers to fine pores between the aggregates forming the solid phase of an inorganic foam. This solid phase consists of matter that is usually not 100 percent impervious but contains a certain volume fraction of micropores. The size and shape of micropores depend largely on the chemical and mineral composition of the solid phase and on material processing. The dimensions of the micropores are < 0.030 mm and can therefore typically not be characterized by light microscopic image analysis.

A **"closed-cell foam"** is a foam wherein the walls of the macropores are essentially undisrupted.

This leads to a high static air flow resistivity of the concerned foam layer as will be explained later.

The term **"inorganic"** as used throughout the present specification refers to a percentage of inorganic material in the respective foam layer of preferably at least 95% by weight, more preferably of at least 98% by weight and most preferably of at least 99% by weight. According to a preferred embodiment, the inorganic closed-cell foam is selected from gypsum foam, cement foam, cement mortar foam, ceramic foam, and mixtures thereof. These materials are inorganic, rigid and non-combustible because of their respective chemistry.

**"Water",** as denoted herein, can refer to pure deionized H₂O, or water containing up to 0.1 wt.-% impurities and/or salts, such as normal tap water.

The term **"aspect ratio"** as used throughout this specification refers to the ratio between median pore size and median thickness of the pore walls.

According to a preferred embodiment, the aspect ratio should be between 20 and 60, preferably between 30 and 60, more preferably between 40 and 60, and even more preferably between 45 and 55. It was found (see Example 3.1 and Example 3.4) that the respective material exhibits an absorption coefficient of 0.83 at 843 Hz for 22 mm absorber thickness at an aspect ratio of about 55.

The term **"amphiphilic compound"** is well known in the art and relates to organic compounds having a nonpolar part (also identified as tail group) and a polar part (also identified as head group). Accordingly, suitable amphiphilic molecules contain a tail coupled to a head group, typically by covalent bonds. Such amphiphilic molecules typically contain one tail and one head group, but they may also contain more than one head group or tail group.

Foams that partly consist of gypsum or of hydrated cement are even flame retardant because they contain hydrates that release water in case of heat impact at temperatures of between 90 and 300°C. The processes of dehydration and water evaporation consume energy and do thereby retard a fire. Ceramic foams, namely refractory ceramic foams exhibit high-temperature stability with application temperatures in the range of 1,100 - 1,800°C. Well-engineered mullite foam, for example, can be used in applications up to 1600°C, thus, the perforated mullite foam disclosed herein can be used as sound absorber up to this temperature.

The inventive foams can be molded and/or machined to defined outer dimensions. They are volumetrically stable. Therefore, they can be mounted to walls and ceilings with techniques and tools as they are known in the construction industry. In addition, decorative elements like acoustically active renders or cover sheets can be attached to a surface of the material by any suitable means. The subject foams are preferably particle-stabilized foams as these foams are generally closed-cell foams also at high porosities, exhibiting, in their non-perforated state, a high static air flow resistivity. They further exhibit macropores generated by means of a blowing agent or a gas, as well as micropores.

According to a preferred embodiment, the inventive inorganic closed-cell foams comprise macropores and micropores as defined above. Low microporosity yields a perfectly closed-cell foam. High microporosity yields an essentially open-cell foam. In an intermediate range, the micropores interact with the perforated macropores and a small variation of the microporosity can influence the resulting sound absorption curve. The fraction of the micropores, "Φ_{m"}, if present, should be between 20 vol% and 45 vol%, preferably 20 - 40 vol%, more preferably 25 - 35 vol%. Experimental evidence therefor can be found in Example 8. The micropore fraction is quantified relative to the volume of the continuous phase of the foam, which corresponds to the volume of the total foam body minus the volume of the macropores.

The median pore size d₅₀ of the inorganic closed-cell foam according to the present invention is suitably from 0.1 mm to 5.0 mm, preferably from 0.3 mm to 4.0 mm, more preferably from 0.3 to 3.5 mm, even more preferably from 0.9 to 3.5 mm and most preferably from 0.9 to 3.0 mm. These pores are macropores in contrast to the micropores as discussed above. In general, foams comprising smaller pores tend to be less effective in overall sound absorption while foams comprising larger pores are increasingly difficult to be cut into thin sound absorbing layers.

The span of the macropore size distribution (Sₚ) is suitably from 0.5 to 2, preferably from 0.8 to 1.5, more preferably from 0.9 to 1.4, and even more preferably 1.0 to 1.4. A small span value corresponds to a narrow pore size distribution and signifies that a large fraction of the pores exhibits a diameter close to the median pore diameter, the one that the material is engineered for to deliver the desired absorption properties. Large span values go together with broad pore size distributions. Respective foams exhibit less sharply defined properties with a relatively small fraction of the pores having a diameter close to the median pore diameter. This means, that a smaller volume of the material exhibits the desired set of properties that is needed to achieve the target absorption characteristics.

There might be situations where a broad span of the macropore size distribution (Sₚ) is favored over a narrow one. For example, if a bimodal or a multimodal pore size distribution is required. In such a situation (Sₚ) is from 1.0 to 3.0, preferably from 1.3 to 2.5, more preferably from 1.3 to 2.0.

The total porosity p as defined above is suitably from 60 to 99 vol%, preferably from 80 to 97 vol%, more preferably from 80 to 95 vol%, and most preferably from 85 to 95 vol%. Less than 60 vol% total porosity tends to be insufficient in overall sound absorption while it is technically very challenging to produce foams with more than 99 vol% of total porosity.

The diameters of the individual perforations dₚ of the inorganic closed-cell foam are suitably from 0.1 to 1.5 mm, preferably from 0.2 to 1.2 mm, more preferably from 0.2 to 1.0 mm, even more preferably from 0.3 to 1.0 mm and most preferably 0.3 to 0.7 mm. As a rule of thumb, the perforations should be smaller than the median pore size as defined above. Otherwise, the perforations would randomly connect too many of the pores and the foam properties would approach the ones of a porous absorber.

In contrast to the prior art as discussed above, such small perforations can be considered micro-perforations. The advantage of such micro-perforations lies in the fact that the surface of the individual sound absorbing layer remains essentially undisturbed. Only a fraction of the pores of the individual inorganic closed-cell foam are opened in a controlled manner that allows to precisely engineer the sound absorbing properties of such foams.

The perforation pattern should have a perforation spacing lₚ from 1 to 20 mm, preferably from 2 to 10 mm, more preferably from 2 to 8 mm, even more preferably from 2 to 5 mm or 5 to 10 mm. As a rule of thumb, Iₚ should be larger than the median pore size as defined above. Suitable perforation patterns are, for instance, a rectangular pattern, a square pattern, a hexagonal pattern or a random pattern. Generally, lₚ divided by d₅₀ should suitably be in the range of 1 to 20, preferably 1 to 12, in particular 1 to 6.

The dependency of the absorption coefficient α on diameter dₚ, perforation spacing lₚ, frequency, pore size d₅₀, micropore fraction Φₘ, and configuration of the sound absorbing system will be demonstrated in the experimental section. The perforation diameters may vary within the individual sound absorbing layer. However, the perforation diameters should be preferably essentially uniform in size.

As mentioned above, the sound absorbing system of the present invention refers to a device comprising one or several layers of materials or gaps, respectively, each of which contribute to the overall sound absorption. In particular, the sound absorbing system may comprise two or more layers each comprising a perforated or a non-perforated inorganic closed-cell foam. The first layer as defined above must be a perforated closed-cell inorganic foam.

As mentioned above, the sound absorbing system according to the invention may additionally comprise one or more gaps situated behind the first layer as defined above. These gaps may be air gaps or spaces filled with, for instance, glass wool or stone wool. Such gaps may be referred to as layers hereinbelow. These gaps tend to contribute to low frequency absorption and they tend to contribute to broad band absorption.

An individual layer of the sound absorbing system according to the present invention should suitably have a thickness d_{A} of from 5 to 300 mm, preferably from 10 to 60 mm, more preferably from 10 to 50 mm, even more preferably from 10 to 25 mm. The total thickness L of the sound absorbing system should suitably be from 5 to 300 mm, preferably from 10 to 80 mm, more preferably from 20 to 80 mm, and even more preferably 20 to 60 mm, most preferably 20 to 50 mm, or alternatively 10 to 60 mm. That means if only one single perforated inorganic closed-cell foam layer is used it may have the size of the total sound absorbing system. If the system comprises multiple layers the individual layers may be much thinner.

Expressed in relative terms, the thickness of a single sound absorbing layer d_{A} or of the total system L is preferably smaller than the wavelength corresponding to the first maximum that occurs in the absorption spectrum if one scans through the spectrum in the direction of increasing frequencies. The thickness of the sound absorbing system should be smaller than a quarter of the wavelength of the lowest absorbed frequency maximum (λ/4), more preferably smaller than one tenth of such wavelength (λ/10) and most preferably smaller than one twentieth of such wavelength (λ/20). This is referred to as a "sub-wavelength" sound absorber.

Moreover, again expressed in different terms, the ratio λ/L or λ/d_{A}, respectively, at the first absorption maximum should be in the range from 5 to 62, preferably from 5 to 50, more preferably from 5 to 35, even more preferably from 5 to 28, most preferably from 5 to 20, and in particular from 8 to 20, and even further preferred from 10 to 20. Of course, the individual layers or the total system may be thicker than such sub-wavelength thicknesses if higher absorption coefficients α are required. Especially, if higher absorption coefficients are required at low frequencies in the interval of 100 - 1000 Hz.

The static air flow resistivity σ of an individual inorganic perforated or non-perforated closed-cell foam layer should be 1,000 to 80,000,000 Pa_{*}s/m², preferably from 1,000 to 10,000,000 Pa·s/m², more preferably from 1,000 to 2,000,000 Pa_{*}s/m² and in particular from 10,000 to 2,000,000 Pa_{*}s/m². This very broad range is because the sound absorbing system of the present invention may comprise perforated and also non-perforated inorganic closed-cell foams. As a rule of thumb, layers with lower air flow resistivity should be closer to the source of sound while layers with higher air flow resistivity should be arranged towards the rear end of the sound absorbing system. In the case of static air flow resistivities exceeding the specified upper limits, the layers will reflect the incident soundwaves without much attenuation. In the case of too low air flow resistivities, the soundwaves will pass through the respective absorbing layers essentially unattenuated.

In the case of non-perforated closed-cell foam layers, static air flow resistivities generally range from 80,000 to 80,000,000 Pa·s/m², preferably from 200,000 to 80,000,000 Pa·s/m², more preferably from 1,000,000 to 80,000,000 Pa·s/m², and even more preferably from 1,000,000 to 10,000,000 Pa_{*}s/m². Alternatively, the static air flow resistivities of non-perforated closed-cell foam layers are 80,000 to 10,000,000 Pa_{*}s/m², preferably 200,000 to 10,000,000 Pa_{*}s/m².

In the case of perforated closed-cell foam layers, air flow resistivities generally range from 1,000 to 1,000,000 Pa·s/m², preferably from 1,000 to 600,000 Pa_{*}s/m², more preferably from 1,000 to 200,000 Pa·s/m², and most preferably from 10,000 to 200,000 Pa_{*}s/m².

Adding perforations to a closed-cell foam generally decreases the static air flow resistivity by a factor of 5 or more, preferably by a factor of 10 or more.

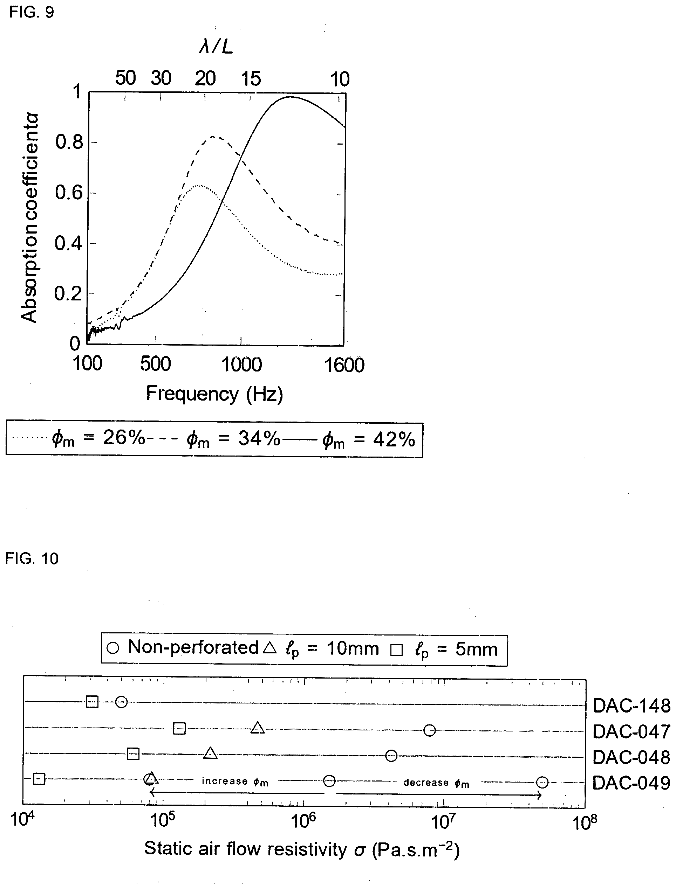

As indicated above, small changes in the micropore fraction Φₘ of the inventive foam materials have a big impact on their static air flow resistivity, as shown in Figure 10. Statements in this paragraph made about the micropore fraction mean the fraction of micropores that is generated by the mixing water. But they may equally apply if the micropore fraction is manipulated by any other means. A non-perforated foam with a micropore fraction of 34 vol% exhibits e.g. a static air flow resistivity of 1,500,000 Pa_{*}s/m². If the micropore fraction is changed to 26 or 42 vol%, the static air flow resistivity changes to 50,000,000 or 81,000 Pa_{*}s/m², respectively.

According to a second aspect, the present invention provides a process for the manufacturing of a layer comprising a perforated inorganic closed-cell foam, comprising the steps of:
mixing
   (i) at least one group of inorganic particles which are different from the inorganic binders (iii),
   (ii) at least one amphiphilic compound,
   (iii) at least one group of inorganic binders selected from calcium sulfate, hydraulic binders such as cements, ceramic particles, latent hydraulic binders, pozzolanic binders, fillers, and mixtures thereof,
   (iv) water; and optionally
   (v) at least one additive,
foaming the resulting mixture by chemical, physical or mechanical foaming,
casting in form, allowing to solidify,
and in arbitrary order:
   optionally cutting to size,
   applying perforations,
   allowing to fully harden or sintering.

Parts made from ceramic particles develop strength upon sintering. Therefore, ceramic particles are no binders in the classic sense. Also fillers are no binders and develop strength only together with other binders from the group (iii). For ease of definition, however, ceramic particles and fillers have been included in the definition of group (iii).

According to a preferred embodiment of the above-mentioned process, the at least one group of inorganic particles (i) is selected from the group consisting of oxides, hydroxides, carbides, nitrides, phosphates, carbonates, silicates, sulfates, and mixtures thereof. As stated above, these particles are not identical to the at least one group of inorganic binders (iii). The at least one group of inorganic binders (iii) are intended to form the non-combustible rigid inorganic closed-cell foams while the inorganic particles (i) are intended to be surface-modified by the amphiphilic compound(s) (ii) to be capable of stabilizing the gas-liquid interface of the foamed mixtures until solidified and/or fully hardened.

It is preferred that the at least one group of inorganic particles (i) is selected from the group consisting of silica particles, alumina particles, zirconia particles, calcium carbonate particles, and mixtures thereof. Calcium carbonate particles, silica particles and alumina particles are especially preferred. Calcium carbonate particles are particularly preferred.

From the definitions of the process it becomes clear that resulting foams are particle-stabilized foams. Particle stabilized foams are extremely stable already in the wet stage. The technology of particle stabilization results in foams with mainly closed macropores even at high porosities, and it results in gradient-free pore structures. Thanks to the high stability, particle-stabilized wet foams show no change in the density, the porosity, and the pore size during processing. It is this fact that allows for a deliberate control of material properties like the median pore size.

According to a preferred embodiment of the process of this invention, the foams of the present invention feature an exceptionally good homogeneity. This is thanks to the excellent wet foam stability resulting from the inventive process based on particle-stabilization. In an economical production, foam is manufactured in bulk and then sliced to boards of desired thickness. The higher a bulk foam can be produced, the more economical is the production. Typically, a foam formation process is prone to developing gradients along the height axis due to the impact of gravity, whereas no issues are expected in lateral dimensions. Homogeneity becomes the more important the thinner final foam layers are sliced from a foam block. For 10 mm acoustic foam slices, deviations from the desired material properties between the bottom and top of a block lead to larger differences in the properties among bottom and top slices as this would be the case for bulkier boards of for example 100 mm thickness, where deviations from target material properties tend to average out. For a foam block of 400 mm height, dry densities measured on 100 x 100 x 20 mm³ samples cut 10 mm from and in parallel to the bottom and top foam face, respectively, are essentially identical, as shown in Example 12. The dry density deviation of the top or the bottom sample from the average of the two samples is smaller than 6%, preferably smaller 3%, more preferably smaller 2%, and even more preferably smaller 1%. For a foam block of 400 mm height, dry total porosities measured on 100 x 100 x 20 mm³ samples cut 10 mm from and in parallel to the bottom and top foam face, respectively, are essentially identical, as shown in Example 12. The dry total porosity deviation of the top or the bottom sample from the average of the two samples is smaller than 2%, preferably smaller 1%, more preferably smaller 0.5%, even more preferably smaller 0.2%. For a foam block of 400 mm height, the median pore sizes d₅₀ measured on 100 x 100 x 20 mm³ samples cut 10 mm from and in parallel to the bottom and top foam face, respectively, are essentially identical, as shown in Example 12. The median pore size d₅₀ deviation of the top or the bottom sample from the average of the two samples is smaller than 5%, preferably smaller 3%, more preferably smaller 2%, and even more preferably smaller 1%. For a foam block of 400 mm height, the spans of the pore size distributions measured on 100 x 100 x 20 mm³ samples cut 10 mm from and in parallel to the bottom and top foam face, respectively, are essentially identical, as shown in Example 12. The deviation of the span values of the top or the bottom sample from the average of the two samples is smaller than 7%, preferably smaller 5%, more preferably smaller 3%, and even more preferably smaller 2%.

Thanks to the excellent wet foam stability resulting from the process based on particle-stabilization, the reproducibility of dry foam density, porosity, and median pore size d₅₀ is good. This is demonstrated in Example 13 for a production series of 17 foam blocks of 420 x 420 x 400 mm³. The percent standard deviation for the dry density is smaller than 6%, preferably smaller 4%, more preferably smaller 3%, and even more preferably smaller 2%. The percent standard deviation for the dry porosity is smaller than 2%, preferably smaller 1%, more preferably smaller 0.5%, even more preferably smaller 0.2%. The percent standard deviation for the median pore size d₅₀ is smaller than 6%, preferably smaller 4%, more preferably smaller 3%, and even more preferably smaller 2%.

The gas phase present in the foam can be introduced by mechanical foaming in the presence of the respective gas. Mechanical foaming may be performed for example by using a mixer, or by an oscillating process, or by a rotor-stator process. The gas phase can also be introduced into the foam by physical or chemical foaming, wherein the physical or chemical foaming process is suitable to liberate a gas. Preferably, blowing agents are used, which evaporate, decompose, or react with water and/or an acid to liberate the gas. Non-limiting examples of blowing agents are peroxides, such as hydrogen peroxide, dibenzylperoxide, peroxobenzoic acid, peroxoacetic acid, alkali metal peroxides, perchloric acid, peroxomonosulfuric acid, dicumyl peroxide or cumyl hydroperoxide; isocyanates, carbonates and bicarbonates, such as CaCO₃, Na₂CO₃, and NaHCO₃, which are preferably used in combination with an acid, e.g., a mineral acid; metal powders, such as aluminum powder; azides, such as methyl azide; hydrazides, such as p-toluenesulfonylhydrazide; hydrazine.

Chemical foaming can be facilitated using a catalyst. Suitable catalysts preferably comprise Mn²⁺, Mn⁴⁺, Mn⁷⁺ or Fe³⁺ cations. Alternatively, the enzyme catalase may be used as catalyst. Non-limiting examples of suitable catalysts are MnO₂ and KMnO₄. Further examples are Fe₂O₃ and potassium iodide. Such catalysts are preferably used in combination with peroxide blowing agents. A preferred catalyst in combination with peroxide blowing agents is MnO₂.

The term "group of inorganic particles" as used herein is to be understood as a plurality of inorganic particles of one kind. It is also to be understood that at least one, i.e., one or more groups, of inorganic particles may be used according to the invention, which means that also various mixtures of the above defined inorganic particles are possible.

The particle size of the at least one group of inorganic particles (i) may vary within a broad range. For powders (primary particles), suitable median particle sizes, d₅₀, range from 30 nm to 300 µm, preferably from 100 nm to 250 µm, more preferably from 100 nm to 150 µm, even more preferably from 100 nm to 100 µm. In a further embodiment, suitable particle sizes range from 100 nm to 10 µm, preferably 100 nm to 2 µm. It was found that the particle size distribution is of less importance. Good foams can be obtained with narrow as well as with broad particle size distributions.

As mentioned above, the term median particle size d₅₀ refers to the diameter of a particle size distribution compared to which 50% of the particles have an equal or smaller diameter. The particle size can be measured by laser diffraction or dynamic light scattering (DLS) methods. According to the present invention dynamic light scattering (DLS) according to ISO 22412:2008 is preferably used. Dynamic light scattering (DLS), sometimes referred to as Quasi-Elastic Light Scattering (QELS), is a non-invasive, well-established technique for measuring the size and size distribution of molecules and particles typically in the submicron region. In the present invention the particles were characterized in a well dispersed state, preferably using water, 2-propanol, or ethanol as dispersing medium. The Brownian motion of particles or molecules in suspension causes laser light to be scattered at different intensities. Analysis of these intensity fluctuations yields the velocity of the Brownian motion and hence the particle size using the Stokes-Einstein relationship.

More specifically, the at least one amphiphilic compound comprises amphiphilic compounds with at least one polar head group and at least one nonpolar tail group, wherein the at least one head group is selected from the group consisting of phosphates, phosphonates, sulfates, sulfonates, alcohols, amines, amides, pyrrolidines, gallates, and carboxylic acids, and wherein the at least one tail group is selected from an aliphatic or an aromatic or a cyclic group with 2 to 8 carbon atoms, wherein the carbon atoms are optionally substituted with one or more, same or different substituents selected from C₁-C₈-alkyl, OH, and NH₂.

In the context of the present invention, it is preferred that the head group of the amphiphilic compound be selected from carboxylic acids, gallates and amines, and the tail group be selected from aliphatic groups with 2 to 8 carbon atoms.

Finally, the perforations can be applied through punching with needles, water jet cutting or laser cutting. Foams may be perforated in their dry state. Alternatively, the foams may also be perforated after the initial setting increases the rigidity of the material to such a degree that perforating the foam with a needle does not deform the foam lamellae but forms round holes through the foam lamellae with diameters that essentially replicate the diameter of the perforating needle. It may be advantageous to punch the green body of a ceramic foam before sintering.

The present invention will now be explained in further detail by the following non-limiting examples with reference to the enclosed drawings. In the drawings,
Fig. 1 shows absorption coefficients of DAC-047 foam layers (perforated and non-perforated),
Fig. 2 shows absorption coefficients of DAC-048 foam layers (perforated and non-perforated),
Fig. 3 shows absorption coefficients of DAC-049 foam layers (perforated and non-perforated),
Fig. 4 shows an exploded view of an assembled sound absorbing system,

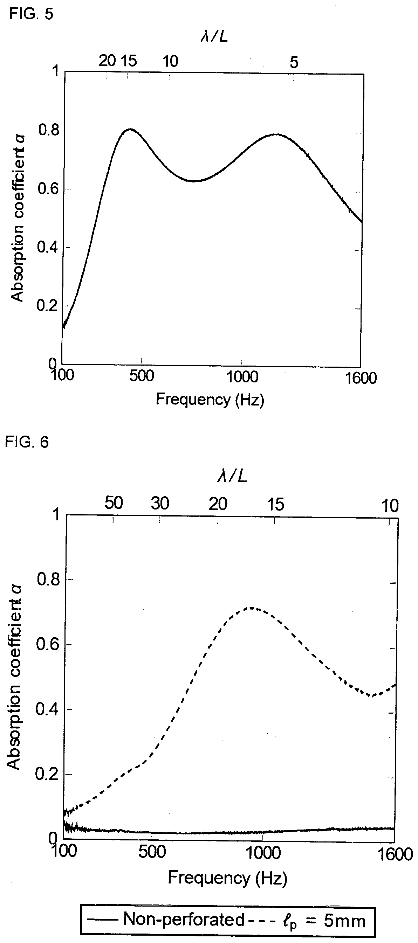

Fig. 5 shows the absorption spectrum of the system according to Fig. 4,
Fig. 6 shows absorption coefficients of DAC-079 foam layers (perforated and non-perforated),
Fig. 7 shows absorption coefficients of DAC-147 foam layers (perforated and non-perforated),
Fig. 8 shows absorption coefficients of open-cell DAC-148 foam layers (perforated and non-perforated),
Fig. 9 shows absorption coefficients of perforated foam layers with different microporosity,
Fig. 10 shows static air flow resistivities of different perforated and non-perforated foam layers,

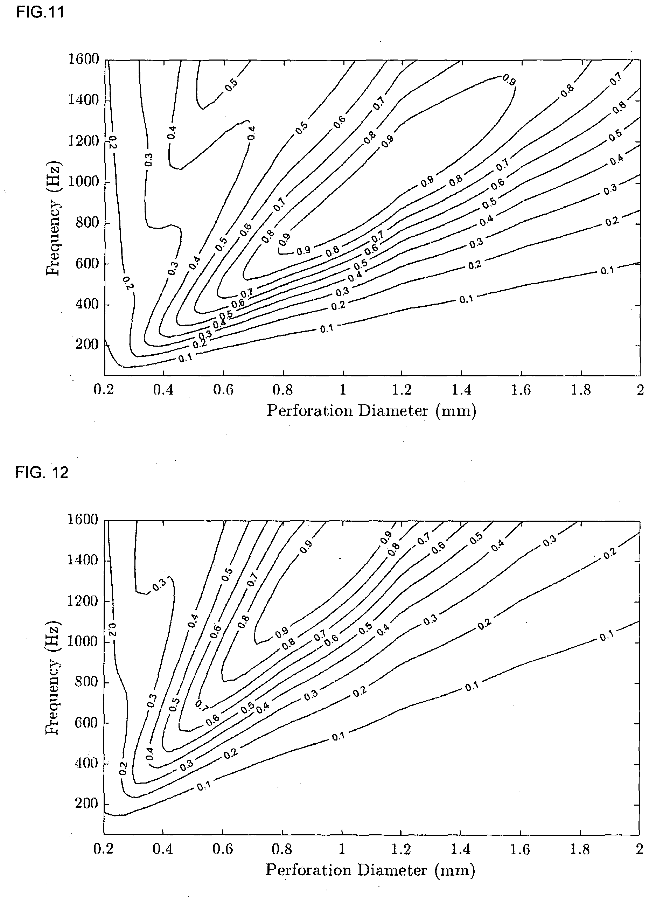

Fig. 11 shows the influence of the perforation diameters on a 40 mm DAC-049 foam layer,
Fig. 12 shows the influence of the perforation diameters on a 25 mm DAC-049 foam layer,

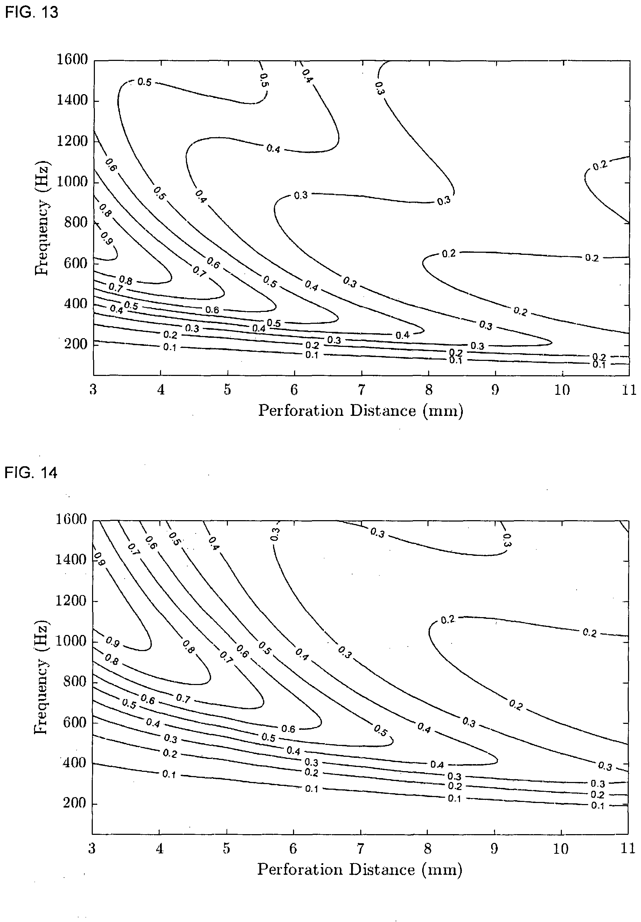

Fig. 13 shows the influence of the perforation distances on a 40 mm DAC-049 foam layer,
Fig. 14 shows the influence of the perforation distances on a 25 mm DAC-049 foam layer.

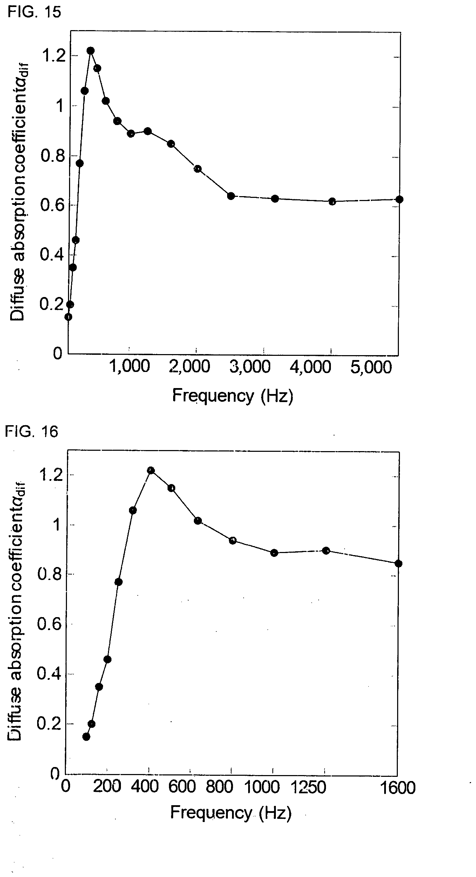

Fig. 15 shows the diffuse field absorption of an altogether 6.4 m² sound absorbing system according to Fig. 4
Fig. 16 shows an enlarged portion of Fig. 15.

### EXAMPLES

### Example 1: Preparation of Gypsum Foam "DAC-047" (p = 89.7 vol%, d₅₀ = 1.03 mm)

### Example 1.1: Foam formation powder

A foam formation powder was prepared from the following components:

| Ingredients | [g] |
|---|---|
| Calcium carbonate (Precarb 100, Schaefer Kalk) | 200.00 |
| Nonanoic acid | 1.00 |
| MnO₂ | 16.58 |
| | |
| Sum | 217.58 |

All constituents were filled in a 1000 mL low density polyethylene milling bottle containing 800 g 15 mm diameter alumina milling balls. The bottle was rolled for 18 h to obtain a homogeneous mixture. Thereafter, the homogenized dry powder was separated from the milling balls using a polymer sieve.

### Example 1.2: Preparation of a non-perforated foam layer

A gypsum foam layer was prepared from the following components including the foam formation powder as prepared in Example 1.1:

| Foam ingredients | [g] |
|---|---|
| Calcium sulphate hemihydrate (alpha 40, Casea) | 2116.00 |
| Foam formation powder | 116.19 |
| Citric acid monohydrate | 0.16 |
| Water | 1002.69 |
| H₂O₂ (50%) | 42.17 |
| | |
| Sum | 3277.22 |

Water and the foam formation powder were given to a beaker and dispersed using a rotor-stator homogenizer. Subsequently, the citric acid monohydrate was added, and the suspension was agitated with an overhead stirrer. Then gypsum powder was added to the suspension and the gypsum slurry was stirred for 5 min. The foaming was initiated by mixing the hydrogen peroxide for 10 s into the gypsum slurry. Immediately after the 10 s of peroxide mixing, the slurry was poured to a mold of 40 x 30 x 12 cm³ dimensions where the foam expansion evolved until the hydrogen peroxide was entirely decomposed. The gypsum foam was demolded as soon as a strength gain was manually sensed. The foam was sealed in a plastic bag and allowed to set. 120 min after foaming, the foam was dried to a constant weight at temperatures < 40 °C.

| Foam properties | |
|---|---|
| Material ID | DAC-047 |
| Dry total porosity p (vol%) | 89.7 |
| Dry density d (g/mL) | 0.238 |
| Median pore size d₅₀ (mm) | 1.03 |
| Span pore size distribution Sₚ (-) | 1.11 |
| Perforation distance lₚ (mm) | - |
| Perforation diameter dₚ (mm) | - |

### Example 1.3: Preparation of a perforated foam layer (lₚ = 10 mm)

Example 1.2 was repeated. The gypsum foam was perforated immediately after demolding in its wet state. Perforation was done in perpendicular direction to the surface using a tool with a 4.5 x 4.5 cm² two-dimensional array of 0.5 mm diameter needles with a perforation distance between the needles (lₚ) of 10 mm. The perforated foam was then sealed in a plastic bag and allowed to set. 120 min after foaming, the foam was dried to a constant weight at temperatures < 40°C.

| Foam properties | |
|---|---|
| Material ID | DAC-047 |
| Dry total porosity p (vol%) | 89.7 |
| Dry density d (g/mL) | 0.238 |
| Median pore size d₅₀ (mm) | 1.03 |
| Span pore size distribution Sₚ (-) | 1.11 |
| Perforation distance lₚ (mm) | 10 |
| Perforation diameter dₚ (mm) | 0.5 |

### Example 1.4: Preparation of a perforated foam layer (lₚ = 5 mm)

Example 1.3 was repeated, except that the perforations were applied with a 4.5 x 4.5 cm² two-dimensional array of 0.5 mm diameter needles with a perforation distance (lₚ) of 5 mm.

| Foam properties | |
|---|---|
| Material ID | DAC-047 |
| Dry total porosity p (vol%) | 89.7 |
| Dry density d (g/mL) | 0.238 |
| **Median pore** size d₅₀ (mm) | 1.03 |
| Span pore size distribution Sₚ (-) | 1.11 |
| Perforation distance lₚ (mm) | 5 |
| Perforation diameter dₚ (mm) | 0.5 |

### Example 1.5: Sound Absorption Measurements of DAC-047

Normal incidence sound absorption measurements were carried out on an impedance tube setup according to ISO 10534-2 with 22 mm thick foam layers (disks). The results are shown in Fig. 1. Non-perforated foam as prepared in Example 1.2 with closed and rigid pore walls exhibited an absorption coefficient of < 0.12 for frequencies below 1600 Hz and no first absorption maximum. A material with such low absorption was considered unfit for use for acoustic treatments, especially unfit for absorbing at frequencies below 500 Hz. The perforated foam with 10 mm perforation distance according to Example 1.3 exhibited an absorption maximum of 0.13 at 257 Hz at a relative absorber thickness of A/60. The perforated foam with 5 mm perforation distance according to Example 1.4 showed an absorption maximum of 0.33 at 418 Hz at a relative absorber thickness of λ/37. With Example 1, it was demonstrated that initially low-absorbing closed-cell gypsum foam was rendered acoustically absorptive by adding sub-millimeter perforations to the material.

### Example 2: Preparation of Gypsum Foam "DAC-048" (p = 92.1 vol%, d₅₀ = 2.04 mm)

### Example 2.1: Foam formation powder

A foam formation powder was prepared as described in Example 1.1.

| Ingredients | [g] |
|---|---|
| Calcium carbonate (Precarb 100, Schaefer Kalk) | 200.00 |
| Nonanoic acid | 1.00 |
| MnO₂ | 33.89 |
| | |
| Sum | 234.89 |

### Example 2.2: Preparation of non-perforated foam

A gypsum foam layer was prepared, following the procedure given in Example 1.2, from the following components including the foam formation powder as prepared in Example 2.1:

| Foam ingredients | [g] |
|---|---|
| Calcium sulphate hemihydrate (alpha 40, Casea) | 2162.00 |
| Foam formation powder | 62.72 |
| Citric acid monohydrate | 0.16 |
| Water | 991.22 |
| H₂O₂ (50%) | 55.78 |
| | |
| Sum | 3271.88 |

| Foam properties | |
|---|---|
| Material ID | DAC-048 |
| Dry total porosity p (vol%) | 92.1 |
| Dry density d (g/mL) | 0.182 |
| Median pore size d₅₀ (mm) | 2.04 |
| Span pore size distribution Sₚ (-) | 1.15 |
| Perforation distance lₚ (mm) | - |
| Perforation diameter dₚ (mm) | - |

### Example 2.3: Preparation of a foam with 10 mm perforation distance

Example 2.2 was repeated. The gypsum foam was perforated immediately after demolding in its wet state. Perforation was done in normal direction to the surface using a tool with a 4.5 x 4.5 cm² two-dimensional array of 0.5 mm diameter needles with a perforation distance between the needles of 10 mm.

| Foam properties | |
|---|---|
| Material ID | DAC-048 |
| Dry total porosity p (vol%) | 92.1 |
| Dry density d (g/mL) | 0.182 |
| Median pore size d₅₀ (mm) | 2.04 |
| Span pore size distribution Sₚ (-) | 1.15 |
| Perforation distance lₚ (mm) | 10 |
| Perforation diameter dₚ (mm) | 0.5 |

### Example 2.4: Preparation of a foam with 5 mm perforation distance

Example 2.3 was repeated, except that perforation was done in normal direction to the surface using a tool with a 4.5 x 4.5 cm² two-dimensional array of 0.5 mm diameter needles with a perforation distance between the needles of 5 mm.

| Foam properties | |
|---|---|
| Material ID | DAC-048 |
| Dry total porosity p (vol%) | 92.1 |
| Dry density d (g/mL) | 0.182 |
| Median pore size d₅₀ (mm) | 2.04 |
| Span pore size distribution Sₚ (-) | 1.15 |
| Perforation distance lₚ (mm) | 5 |
| Perforation diameter dₚ (mm) | 0.5 |

### Example 2.5: Sound Absorption Measurements of DAC-048

Normal incidence sound absorption measurements were carried out on an impedance tube setup according to ISO 10534-2 with 22 mm thick foam layers (disks). The results are shown in Fig. 2. Non-perforated foam as prepared in Example 2.2 with closed and rigid pore walls exhibited an absorption coefficient of < 0.14 for frequencies below 1600 Hz and no first absorption maximum. A material with such low absorption was considered unfit for use for acoustic treatments, especially unfit for absorbing at frequencies below 500 Hz. The perforated foam with 10 mm perforation distance of Example 2.3 exhibited an absorption maximum of 0.22 at 324 Hz at a relative absorber thickness of λ/48. Example 2.4 showed an absorption maximum of 0.53 at 599 Hz at a relative absorber thickness of λ/26. With Example 2, it was demonstrated that initially low-absorbing closed-cell gypsum foam was rendered acoustically absorptive by adding sub-millimeter perforations to the material.

### Example 3: Preparation of Gypsum Foam "DAC-049" (p = 94.6 vol%, d₅₀ = 3.28 mm)

### Example 3.1: Preparation of non-perforated foam

A gypsum foam layer was prepared, following the procedure given in Example 1.2, from the following components including the foam formation powder as prepared in Example 2.1:

| Foam ingredients | [g] |
|---|---|
| Calcium sulphate hemihydrate (alpha 40, Casea) | 2162.00 |
| Foam formation powder | 62.72 |
| Citric acid monohydrate | 0.16 |
| Water | 968.36 |
| H₂O₂ 50% | 82.98 |
| | |
| Sum | 3276.22 |

Median cell wall thicknesses are obtained from analysis of cross-sectional images of pore structures applying the linear intercept method using the software Linear Intercept (TU Darmstadt, Germany).

| Foam properties | |
|---|---|
| Material ID | DAC-049 |
| Dry total porosity p (vol%) | 94.6 |
| Dry density d (g/mL) | 0.124 |
| Median pore size d₅₀ (mm) | 3.28 |
| Span pore size distribution Sₚ (-) | 1.35 |
| Median cell wall thickness (mm) | 0.060 |
| Perforation distance lₚ (mm) | - |
| Perforation diameter dₚ (mm) | - |

### Example 3.2: Preparation of a foam with 10 mm perforation distance

Example 3.1 was repeated. The gypsum foam was perforated immediately after demolding in its wet state. Perforation was done in normal direction to the surface using a tool with a 4.5 x 4.5 cm² two-dimensional array of 0.5 mm diameter needles with a perforation distance between the needles of 10 mm.

| Foam properties | |
|---|---|
| Material ID | DAC-049 |
| Dry total porosity p (vol%) | 94.6 |
| Dry density d (g/mL) | 0.124 |
| Median pore size d₅₀ (mm) | 3.28 |
| Span pore size distribution Sₚ (-) | 1.35 |
| Perforation distance lₚ (mm) | 10 |
| Perforation diameter dₚ (mm) | 0.5 |

### Example 3.3: Preparation of a foam with 5 mm perforation distance

Example 3.2 was repeated, except that perforation was done in normal direction to the surface using a tool with a 4.5 x 4.5 cm² two-dimensional array of 0.5 mm diameter needles with a perforation distance between the needles of 5 mm.

| Foam properties | |
|---|---|
| Material ID | DAC-049 |
| Dry total porosity p (vol%) | 94.6 |
| Dry density d (g/mL) | 0.124 |
| Median pore size d₅₀ (mm) | 3.28 |
| Span pore size distribution Sₚ (-) | 1.35 |
| Perforation distance lₚ x/y (mm) | 5 |
| Perforation diameter dₚ (mm) | 0.5 |

### Example 3.4: Sound Absorption Measurements of DAC-049

Normal incidence sound absorption measurements were carried out on an impedance tube setup according to ISO 10534-2 with 22 mm thick foam layers (disks). The results are shown in Fig. 3. Non-perforated foam as prepared in Example 3.1 with closed and rigid pore walls exhibited an absorption coefficient of < 0.27 for frequencies below 1600 Hz and no first absorption maximum. A material with such low absorption was considered unfit for use for acoustic treatments, especially unfit for absorbing at frequencies below 500 Hz. The perforated foam with 10 mm perforation distance of Example 3.2 exhibited an absorption maximum of 0.35 at 464 Hz at a relative absorber thickness of λ/33. The perforated foam with 5 mm perforation distance of Example 3.3 shows an absorption maximum of 0.83 at 843 Hz at a relative absorber thickness of λ/18. With Example 3, it was demonstrated that the initially low-absorbing closed-cell gypsum foam was rendered acoustically absorptive by adding sub-millimeter perforations to the material.

### Conclusions from Examples 1 - 3

| Material ID | DAC-047 | | | DAC-048 | | | DAC-049 | | |
|---|---|---|---|---|---|---|---|---|---|
| Median pore size d₅₀ (mm) | 1.03 | | | 2.04 | | | 3.28 | | |

| acoustic property | fₚₑₐₖ (Hz) | αₚₑₐₖ (-) | dᵣₑₗ (m) | fₚₑₐₖ (Hz) | αₚₑₐₖ (-) | drel (m) | fₚₑₐₖ (Hz) | αₚₑₐₖ (-) | dᵣₑₗ (m) |
|---|---|---|---|---|---|---|---|---|---|
| non-perforated | α < 0.12 | | | α < 0.14 | | | α < 0.27 | | |
| perforation dₚ 0.5 mm, lₚ 10 mm | 257 | 0.13 | λ/60 | 324 | 0.22 | λ/48 | 464 | 0.35 | λ/33 |
| perforation dₚ 0.5 mm, lₚ 5 mm | 418 | 0.33 | λ/37 | 599 | 0.53 | λ/26 | 843 | 0.83 | λ/18 |

Independent of the pore size, the non-perforated foams do essentially not absorb sound, they are acoustically rigid and can therefore not be used for acoustic treatments. This outcome shows that non-perforated foams are closed-cell foams, because otherwise they would be acoustically active. if the same materials are treated with 0.5 mm diameter perforations, they exhibit absorption maxima in the investigated frequency range of 100 - 1,600 Hz. Peak frequency and peak absorption coefficient increase with increasing pore size and decreasing perforation distance. The relative absorber thicknesses dᵣₑₗ for all samples is in the interval of λ/60 - λ/18, showing that the perforated foams are sub-wavelength absorbers. With these results it is demonstrated that an initially acoustically inactive, rigid, bulk-produced, random cellular material can be engineered into a sub-wavelength acoustic absorber.

### Example 4: Multi-layer broadband sound absorbing system

A sound absorbing system with a total thickness of 55 mm as shown in Figure 4 was assembled. The system consisted of a 10 mm thick non-perforated foam layer according to Example 3.1 and two perforated foam layers of 25 and 10 mm thickness, respectively, according to Example 3.3 that are separated by an air gap of 10 mm thickness. The normal incidence sound absorption of the system placed on a rigid backing was measured in an impedance tube setup according to ISO 10534-2 and plotted in Figure 5. The 55 mm sound absorbing system featured α > 0.30 for frequencies > 200 Hz and α > 0.60 for frequencies between 300 and 1466 Hz. The first absorption maximum appeared at 430 Hz with α = 0.81. The relative thickness of the sound absorbing system at this frequency was λ/14. A second absorption maximum was observed at 1164 Hz with α = 0.79.

### Example 5: Preparation of Cement Mortar Foam "DAC-079" (p = 95.5 vol%, d₅₀ = 3.15 mm)

### Example 5.1: Foam formation powder

The foam formation powder was prepared from the following components:

| Ingredients | [g] |
|---|---|
| Calcium carbonate (Precarb 100, Schaefer Kalk) | 200.00 |
| Enanthic acid | 6.56 |
| MnO₂ | 23.98 |
| | |
| Total | 230.54 |

All constituents were filled in a 1000 mL low density polyethylene milling bottle containing 800 g 15 mm diameter alumina milling balls and the bottle was rolled for 18 h for homogenization. Thereafter, the homogenized, dry powder was separated from the milling balls using a polymer sieve.

### Example 5.2: Preparation of non-perforated foam

A cement-based foam was prepared from the following components including the foam formation powder as prepared in Example 5.1:

| Cement Mortar Composition | [g] |
|---|---|
| Calcium Sulfoaluminate (Alipre^{®}, Italcementi) | 650.88 |
| Calcium Sulfate Dihydrate (CS Dihydrate, Casea) | 202.17 |
| Metakaolin (Argical^{™} M 1200S, Imerys) | 426.53 |
| Fly Ash (Microsit^{®} M10, BauMineral) | 426.53 |
| | |
| Sum | 1706.11 |

| Foam ingredients | [g] |
|---|---|
| Cement mortar | 1706.11 |
| Foam formation powder | 170.90 |
| Water | 1193.14 |
| H₂O₂ (50%) | 90.90 |
| | |
| Sum | 3161.05 |

Water and the foam formation powder were given to a beaker and dispersed using a rotor-stator homogenizer. Subsequently, the suspension was agitated with an overhead stirrer. Cement mortar powder mix was added to the suspension and the slurry was agitated for 15 min. (The flow properties of a mortar slurry may vary depending on the moisture content of the raw materials and the type of mixing equipment used. Therefore, it is possible that, starting from the above formulation, few tests are necessary to adjust the water to solids ratio (w/s) and/or to consider the addition of a small amount of a liquefier such that a pourable slurry results at a minimal w/s.) The foaming was initiated by mixing the hydrogen peroxide for 10 s into the slurry. Immediately after the 10 s of peroxide mixing, the slurry was poured to a mold of 40 x 30 x 12 cm³ dimensions where the foam expansion evolved until the hydrogen peroxide was entirely decomposed. The foam was sealed in a plastic bag and given 16 h time for setting. Then the foam was dried to a constant weight at temperatures < 40°C.

| Foam properties | |
|---|---|
| Material ID | DAC-079 |
| Dry total porosity p (vol%) | 95.5 |
| dry density d (g/mL) | 0.116 |
| Median pore size d₅₀ (mm) | 3.15 |
| Span pore size distribution Sₚ (-) | 1.63 |
| Perforation distance lₚ (mm) | - |
| Perforation diameter dₚ (mm) | - |

The acoustic properties can only be reproduced if the prepared foam exhibits a median pore size d₅₀ comparable to the one stated in the Foam properties table above. Should the d₅₀ value deviate by more than ± 0.3 mm, it is recommended to correct it. The d₅₀ value is a function of H₂O₂ (50%) concentration. An effective way of meeting a target d₅₀ value is to carry out an experiment with 20% lower and one with 20% higher as the original H₂O₂ concentration. The H₂O₂ concentration leading to the target d₅₀ pore size can then be found applying linear interpolation.

### Example 5.3: Preparation of a foam with 5 mm perforation distance

Example 5.2 was repeated. The cement mortar foam was perforated immediately after demolding in its wet state. Perforation was done in normal direction to the surface using a tool with a 4.5 x 4.5 cm² two-dimensional array of 0.5 mm diameter needles with a perforation distance between the needles of 5 mm in x and y. The perforated foam was then dried to a constant weight at temperatures < 40°C.

| Foam properties | |
|---|---|
| Material ID | DAC-079 |
| Dry total porosity p (vol%) | 95.5 |
| Dry density d (g/mL) | 0.116 |
| Median pore size d₅₀ (mm) | 3.15 |
| Span pore size distribution Sₚ (-) | 1.63 |
| Perforation distance lₚ (mm) | 5 |
| Perforation diameter dₚ (mm) | 0.5 |

### Example 5.4: Sound Absorption Measurements of DAC-079

Normal incidence sound absorption measurements were carried out on an impedance tube setup according to ISO 10534-2 with 22 mm thick foam layers (disks). Cement mortar foam exhibited a very low inherent acoustic activity. As shown in Figure 6, the absorption coefficient for the non-perforated foam of Example 5.2 was below 0.04 for frequencies up to 1600 Hz. A material with such low absorption was considered unfit for use for acoustic treatments. Adding 0.5 mm perforations on a rectangular grid with 5 mm perforation distance rendered the material acoustically absorbing with a maximum absorption of 0.72 at 934 Hz at a relative absorber thickness of λ/17. With Example 5, it was demonstrated that initially non-absorbing cement mortar foam was rendered acoustically absorbing by adding sub-millimeter diameter perforations.

### Example 6: Preparation of Ceramic Foam "DAC-147" (p = 89.2 vol%, d₅₀ = 2.80 mm)

Mullite is an aluminosilicate mineral with a theoretical melting point of 1830°C. This is why many refractory ceramic products are based on mullite. Well-engineered mullite refractories can be applied at temperatures above 1600°C.

### Example 6.1: Preparation of a non-perforated mullite refractory foam

A mullite ceramic foam was prepared from the following ingredients:

| Foam ingredients | [g] |
|---|---|
| White silica fume | 37.90 |
| Reactive Alumina (CL370, Almatis) | 126.89 |
| Fused Mullite (0 - 0.12 mm) | 319.89 |
| Heptylamine | 0.60 |
| Citric acid monohydrate | 1.212 |
| NaOH (4N) | 2.908 |
| MnO₂ | 0.35 |
| Water | 84.72 |
| H₂O₂ (50%) | 6.80 |
| | |
| Sum | 581.27 |

Water, citric acid monohydrate and NaOH (4N aqueous solution) were given to a 600 mL beaker. The solution was stirred with an overhead stirrer. The ceramic powders were dispersed in the aqueous medium, followed by the MnO₂ powder. Intense stirring for 30 min ensured that the dispersion became homogeneous. Subsequently, the heptylamine was added and the dispersion was homogenized for another 30 min. The foaming was initiated by mixing the hydrogen peroxide for 10 s into the slurry. Immediately after the 10 s of peroxide mixing, the slurry was poured into a mold of 11 cm diameter and 5 cm height where the foam expansion evolved until the hydrogen peroxide was entirely decomposed. Then the foam was dried in the mold to a constant weight at 30°C and 30% RH.

| Foam properties | |
|---|---|
| Material ID | DAC-147 |
| Sintered total porosity p (vol%) | 89.2 |
| Sintered density d (g/mL) | 0.338 |
| Median pore size d₅₀ (mm) | 2.80 |
| Span pore size distribution Sₚ (-) | 0.97 |
| Perforation distance lₚ (mm) | - |
| Perforation diameter dₚ (mm) | - |

### Example 6.2: Preparation of a foam with 5 mm perforation distance

Example 6.1 was repeated. From the green foam, a 6 x 6 x 3 cm³ sample was cut and perforated using a tool with a 4.5 x 4.5 cm² two-dimensional array of 0.5 mm diameter needles with a perforation distance between the needles of 5 mm in x and y. Subsequently, the perforated foam was punched to a 29 mm diameter cylinder to make it fit to a 30 mm impedance tube measurement setup and fired at 1500°C for 5 h.

| Foam properties | |
|---|---|
| Material ID | DAC-147 |
| Sintered total porosity p (vol%) | 89.2 |
| Sintered density d (g/mL) | 0.338 |
| Median pore size d₅₀ (mm) | 2.80 |
| Span pore size distribution Sₚ (-) | 0.97 |
| Perforation distance lₚ (mm) | 5 |
| Perforation diameter dₚ (mm) | 0.5 |

### Example 6.3: Sound Absorption Measurements of DAC-147

Normal incidence sound absorption measurements were carried out on an impedance tube setup according to ISO 10534-2 with 20 mm thick foam layers (disks). Figure 7 shows the absorption coefficient of non-perforated and perforated mullite foam in the frequency range from 300 to 6400 Hz. The non-perforated refractory foam of Example 6.1 exhibited an absorption coefficient of < 0.1 in the frequency range of 300 - 2000 Hz. A material with such low absorption was considered unfit for use for acoustic treatments. In contrast, the foam of Example 6.2 with 0.5 mm perforations on a rectangular grid with 5 mm perforation distance exhibited a first absorption maximum of 0.75 at 849 Hz at a relative absorber thickness of λ/18. With Example 6, it was demonstrated that initially non-absorbing mullite refractory foam was rendered acoustically absorbing by perforating the material with sub-millimeter diameter needles. This material can be applied for acoustic treatments at application temperatures of up to 1600°C.

### Example 7 (not according to the invention)

DAC-148 is a refractory ceramic foam with a fired density of 0.201 g/mL, a total porosity of 92.8 vol%, a pore size d₅₀ of 1.08 mm, and a span of the pore size distribution of 0.89. It exhibits an open-cell pore structure and as a result a low air flow resistivity of 50,000 Pa.s.m⁻². The low air flow resistivity of the non-perforated foam makes it an example for acoustic behavior of porous materials that are outside the scope of this invention. The acoustic absorption of DAC-148 non-perforated and perforated refractory ceramic foam of 20 mm thickness, is measured in a 30 mm impedance tube setup according to ISO 10534-2. The acoustic absorption is plotted in a frequency range of 300 - 6400 Hz in Figure 8. In contrast to Example 7, here, the non-perforated foam used as a starting material is inherently acoustically absorbing with an absorption coefficient of > 0.48 for frequencies above 1000 Hz and 0.88 at 2000 Hz. After adding perforations of 0.5 mm diameter on a square grid with 5 mm perforation distance in x and y dimension to the inherently absorbing, non-perforated starting material, a similar absorption coefficient is obtained up to 1800 Hz, where α levels off at around 0.8. This example demonstrates the following. An inorganic foam that is intrinsically sound absorbing cannot be engineered by perforating it with sub-millimeter through holes. The perforation has no or even a negative impact on the absorption performance. Engineering the absorption profile by adding sub-millimeter perforations is only possible if the starting material is an acoustically non-absorbing foam. Finally, neither the non-perforated nor the perforated foam show any absorption maximum below 1000 Hz and do therefore not solve the technical problems underlying the present invention.

### Example 8: The Impact of Microporosity on the Acoustic Absorption Spectrum of Perforated Foams of 22 mm Thickness

### Example 8.1: Foam formation powder

A foam formation powder was prepared according to the process described in Example 1.1 from the following components:

| Ingredients | [g] |
|---|---|
| Calcium carbonate (Precarb 100, Schaefer Kalk) | 200.00 |
| Nonanoic acid | 1.99 |
| MnO₂ | 19.02 |
| | |
| Sum | 221.02 |

### Example 8.2: Foam formation powder

A foam formation powder was prepared according to the process described in Example 1.1 from the following components:

| Ingredients | [g] |
|---|---|
| Calcium carbonate (Precarb 100, Schaefer Kalk) | 200.00 |
| Nonanoic acid | 1.00 |
| MnO₂ | 29.56 |
| | |
| Sum | 230.56 |

### Example 8.3: Preparation of foam materials with different microporosity and 5 mm perforation distance

Three gypsum foam layers were prepared following the procedure given in Example 1.2, from the components listed in the table below including the foam formation powders as prepared in Examples 2.1 8.1, and 8.2. The microporosity was controlled by the water to solids ratios of the gypsum suspensions. The volume fraction of microporosity Φₘ that is generated by the mixing water equals the volume difference of mixing water and the water volume consumed during gypsum hydration divided by the volume of the matrix phase of the foam times 100%. To calculate mi-croporosities, the volume of the matrix phase of the foam was assumed to equal the volume of the suspension from which the foam was prepared. The gypsum-forming raw material used in this work was experimentally found to consume 16.7 wt.-% of hydration water (water to CaSO_{4 *} ½ H₂O ratio). The water fraction in the peroxide solution and the water mass generated during peroxide decomposition were added to the mass of mixing water to calculate Φₘ.

| Foam ingredients | [g] | [g] | [g] |
|---|---|---|---|
| Material ID | DAC-122 | DAC-049 | DAC-120 |
| Calcium sulphate hemihydrate (alpha 40, Casea) | 2392.00 | 2162.00 | 1886.00 |
| Foam formation powder Example 2.1 | | 62.72 | |
| Foam formation powder Example 8.1 | 116.31 | | |
| Foam formation powder Example 8.2 | | | 61.56 |
| Citric acid monohydrate | 0.24 | 0.16 | 0.15 |
| Liquefier (Melment F 10 G, BASF) | 4.78 | | |
| Water | 865.29 | 968.36 | 1052.72 |
| H₂O₂ 50% | 59.50 | 82.98 | 125.67 |
| | | | |
| Sum | 3438.13 | 3276.22 | 3126.11 |

The chosen water to solids ratios led to micropore fractions of 26, 34, and 42 vol% (Φₘ-values in Figure 9). The median pore size of the foams was tuned to be between 3.3 - 3.5 mm following the method described in Example 5.2 to minimize its impact on the acoustic properties. All foams were perforated with 0.5 mm diameter through holes arranged on a square grid of 5 mm perforation distance following the method described in Example 1.4.

| Foam properties | | | |
|---|---|---|---|
| Material ID | DAC-122 | DAC-049 | DAC-120 |
| Dry total porosity p (vol%) | 91.6 | 94.6 | 96.8 |
| Micropore fraction Φₘ (vol%) | 25.5 | 33.5 | 41.7 |
| Dry density d (g/mL) | 0.194 | 0.124 | 0.075 |
| Median pore size d₅₀ (mm) | 3.47 | 3.28 | 3.32 |
| Span pore size distribution Sₚ (-) | 1.11 | 1.35 | 1.25 |
| Perforation distance lₚ (mm) | 5 | 5 | 5 |
| Perforation diameter dₚ (mm) | 0.5 | 0.5 | 0.5 |

### Example 8.4: Sound Absorption Measurements of DAC-049, DAC-120, and DAC-122

The measurements were carried out on a 100 mm impedance tube setup according to ISO 10534-2. A plot of sound absorption as a function of frequency for different micropore fractions is presented in Figure 9. Absorption maxima of 0.63/754 Hz, 0.83/843 Hz, and 0.98/1275 Hz were obtained for micro pore fractions of 26, 34, and 42 vol%, respectively, showing that the absorption coefficient and peak frequency increase with micropore fraction. The numbers signify an increase of absorption at the peak frequency due to microporosity of 31 and 56% when increasing the micropore fraction from 26 to 34 or to 42 vol%, respectively. Important for the acoustic performance is further the broadening of the absorption peaks with increasing microporosity. The increase in microporosity from 26 to 34 vol% broadens the peak width at an absorption level of 0.415 by 79% from 548 to 978 Hz.

These results show the importance of the effect of microporosity on the sound absorption performance of rigid mineral foams. Low fractions of microporosity lead to poor acoustical performance whereas high fractions cause the absorption maximum to shift to high frequencies, which can be unbeneficial. The material with 34 vol% microporosity exhibits a 23% higher peak absorption and a 51% lower peak frequency compared to the materials with 26 and 42 vol% microporosity, respectively, and is a good compromise for high absorption in a low frequency band.

### Example 9: Static Air Flow Resistivity

The static air flow resistivity was measured for the foams prepared in Examples 1, 2, 3, 7, 8 according to ISO 9053-1 and is plotted in Figure 10. Whether or not the foams of Examples 1, 2, 3 were perforated, the static air flow resistivity decreased with increasing median pore diameter. For samples with given median pore diameter, the static air flow resistivity decreased by more than one order of magnitude when going from the unperforated foam to foam with 0.5 mm through holes arranged on a square grid with 10 mm distance and by less than one order of magnitude if the perforation distance is decreased from 10 to 5 mm. The static air flow resistivity of non-perforated foams was 1,000,000 to 10,000,000 Pa.s.m⁻², the ones for perforated foams within 10,000 to 600,000 Pa.s.m⁻². The non-perforated gypsum foams with 3 mm median pore size of Example 8 exhibit largely different static air flow resistivities of 81,000, 1,500,000, and 50,000,000 Pa.s.m ² because of their different micropore fraction Φₘ of 41.7, 33.5, and 25.5 vol%, respectively. The static air flow resistivity of the non-perforated refractory ceramic foam of Example 7 (not according to the invention) is low with 50,000 Pa.s.m⁻². Adding perforations of 0.5 mm diameter on a rectangular grid of 5 mm distance in x and y decreases the static air flow resistivity just slightly from 50,000 to 31,000 Pa.s.m⁻².

### Example 10: Effect of perforation diameter and perforation distance

The Johnson-Champoux-Allard model for acoustic absorption, enhanced with the acoustical model for multiporous materials published by Olny and Boutin, J Acoust Soc Am 114, 73-89 (2003) (https://doi.org/10.1121/1.1534607) was applied to predict the normal-incidence acoustic absorption of DAC-049 absorption layers. The resulting contour plots are shown in Figures 11, 12, 13 and 14.

Figure 11 shows absorption levels for a 40 mm thick layer of DAC-049 (d₅₀ ~ 3 mm) with rigid backing. The perforation pattern was rectangular with lₚ = 5 mm. The effect of the perforation diameter on the frequency-dependent absorption was investigated. The highest absorption level (α > 0.9) was achieved for perforation diameters between 0.8 and 1.5 mm. Decreasing the perforation diameter had two effects: it increased the flow resistivity and increased the tortuosity. The flow resistivity became too high for effective sound absorption. The higher tortuosity decreased the frequency of maximum absorption. Increasing the perforation diameter had two effects: it decreased the flow resistivity and decreased the tortuosity. The flow resistivity became too low for effective sound absorption. The lower tortuosity increased the frequency of maximum absorption.

Figure 12 shows absorption levels for a 25 mm thick layer of DAC-049 (d₅₀ ~ 3 mm) with rigid backing. The perforation pattern was rectangular with lₚ = 5 mm. The effect of the perforation diameter on the frequency-dependent absorption was again investigated. The highest absorption level (α > 0.9) was achieved for perforation diameters between 0.7 and 1.2 mm. Decreasing the perforation diameter had two effects: it increased the flow resistivity and increased the tortuosity. The flow resistivity became too high for effective sound absorption. The higher tortuosity decreased the frequency of maximum absorption. Increasing the perforation diameter had two effects: it decreased the flow resistivity and decreased the tortuosity. The flow resistivity became too low for effective sound absorption. The lower tortuosity increased the frequency of maximum absorption. Figure 12 clearly shows that an absorption maximum with α ≥ 0.8 can be achieved at 800 Hz for a perforation diameter of 0.6 mm.

Figure 13 shows absorption levels for a 40 mm thick layer of DAC-049 (d₅₀ ~ 3 mm) with rigid backing. The perforation pattern was rectangular, and the perforation diameter was 0.5 mm. The effect of the perforation distance on the frequency-dependent absorption was investigated. The highest absorption level (α > 0.9) was achieved for perforation distances lₚ lower than 3.5 mm. Increasing the perforation distance had two effects: it increased the flow resistivity and increased the tortuosity. The flow resistivity became too high for effective sound absorption. The higher tortuosity decreased the frequency of maximum absorption. Decreasing the perforation distance had two effects: it decreased the flow resistivity and decreased the tortuosity. The lower tortuosity increased the frequency of maximum absorption.

Figure 14 shows absorption levels for a 25 mm thick layer of DAC-049 (d₅₀ ~ 3 mm) with rigid backing. The perforation pattern was rectangular, and the perforation diameter was 0.5 mm. The effect of the perforation distance on the frequency-dependent absorption was investigated. The highest absorption level (α > 0.9) was achieved for perforation distances between 3 and 4 mm, which means that all pores were opened. Increasing the perforation distance had two effects: it increased the static air flow resistivity and increased the tortuosity. The static air flow resistivity became too high for effective sound absorption. The higher tortuosity decreased the frequency of maximum absorption. Decreasing the perforation distance had two effects: it decreased the static air flow resistivity and decreased the tortuosity. The static air flow resistivity became too low for effective sound absorption. The lower tortuosity increased the frequency of maximum absorption. Figure 14 clearly shows that an absorption maximum with α > 0.8 could be achieved at 800 Hz for a perforation distance of 5 mm.

### Example 11: Diffuse field sound absorption measurements for the multi-layer broadband sound absorbing system of Example 4

Diffuse field sound absorption measurements on 6.4 m² of the multi-layer broadband sound absorbing system of Example 4 (made from 40 individual absorber systems of 0.4 x 0.4 m²) are carried out according to standard ISO354:2003. A plot of the diffuse field absorption coefficient, α_{dif}, is displayed in FIG 15, a zoom in into the frequency range 0 - 1600 Hz is presented in FIG 16. The diffuse absorption α_{dif} reaches 0.46 and 1.01 at 200 and 300 Hz, respectively. Between 225 and 5000 Hz α_{dif} is > 0.62. A first absorption maximum is observed at 400Hz with α_{dif} = 1.22. The relative absorber thickness is λ/15. A second maximum is found at 1250 Hz with α_{dif} = 0.90. The peak positions and peak absorption coefficients of the diffuse field measurements coincide well with the impedance tube experiments presented in Example 4. The calculated single absorption coefficient, α_{w}, according to ISO 11654 is 0.8. Example 11 proves that the inventive concept of absorbing sound with perforated, initially rigid foams works not only for 100 mm diameter impedance tube measurements with normal incidence sound, but also on scales that are relevant for realistic acoustic treatments in diffuse sound fields.

### Example 12: Homogeneity along the height axis of 420 x 420 x 400 mm³ bulk foams

A bulk foam is prepared according to Example 3.1, but with dimensions of 420 x 420 x 400 mm³. To test the foam homogeneity along the height axis, three samples of 100 x 100 x 20 mm³ are cut in parallel to and at 10 mm distance from the bottom and top surface of the foam cube, respectively. The averaged results for dry density, dry porosity, median pore size d₅₀, and span of the pore size distribution are presented in the table below. The table further shows the average of the top and bottom samples and the absolute and relative deviation of the top or bottom samples from the average. A good homogeneity along the height axis facilitates the manufacture of large bulk foam blocks that can be cut into small absorbing layers of essentially equal acoustical properties.

| | Properties top slice | Properties bottom slice | Average | Absolute deviation | Relative deviation (%) |
|---|---|---|---|---|---|
| Dry density (g/mL) | 0.133 | 0.139 | 0.136 | 0.003 | 2.13 |
| Dry porosity (vol%) | 94.2 | 94.0 | 94.1 | 0.126 | 0.13 |
| d50 (mm) | 3.110 | 3.094 | 3.102 | 0.008 | 0.25 |
| Span (-) | 1.199 | 1.135 | 1.167 | 0.032 | 2.74 |

### Example 13: Reproducibility of the fabrication process for 420 x 420 x 400 mm³ bulk foams

Seventeen bulk foams are prepared according to Example 3.1 with 420 x 420 x 400 mm³ dimensions. To test for reproducibility, the dry density and porosity as well as the median pore size d₅₀ are measured and presented in the below table. The last four rows show the number of results N used for calculating the average, the standard deviation, and the standard deviation in percent of the average where "σ" stands for the standard deviation.

| ID | dry density (g/mL) | dry porosity (vol%) | d50 (mm) |
|---|---|---|---|
| DAC-129 | 0.129 | 94.4 | 3.047 |
| DAC-130 | 0.137 | 94.1 | 3.181 |
| DAC-131 | 0.131 | 94.3 | 3.216 |
| DAC-132 | 0.128 | 94.5 | 3.285 |
| DAC-133 | 0.130 | 94.3 | 3.158 |
| DAC-134 | 0.132 | 94.3 | 3.273 |
| DAC-135 | 0.133 | 94.2 | 3.074 |
| DAC-136 | 0.137 | 94.1 | 3.122 |
| DAC-137 | 0.138 | 94.0 | 3.221 |
| DAC-138 | 0.130 | 94.4 | 3.383 |
| DAC-139 | 0.137 | 94.1 | na |
| DAC-140 | 0.137 | 94.1 | 3.264 |
| DAC-141 | 0.132 | 94.3 | 3.416 |
| DAC-142 | 0.133 | 94.2 | 3.414 |
| DAC-143 | 0.133 | 94.2 | 3.179 |
| DAC-144 | 0.131 | 94.3 | 3.219 |
| DAC-146 | 0.135 | 94.2 | 3.282 |
| | | | |
| N | 17 | 17 | 16 |
| Average | 0.133 | 94.2 | 3.233 |
| σ | 0.003 | 0.134 | 0.106 |
| σ (%) | 2.3 | 0.1 | 3.3 |

## Claims

1. A non-combustible, rigid sound absorbing system, **characterized in that** a first layer of this system comprises a perforated inorganic closed-cell foam.

2. The sound absorbing system according to claim 1, wherein the inorganic closed-cell foam is selected from gypsum foam, cement foam, ceramic foam, and mixtures thereof.

3. The sound absorbing system according to claim 1 or 2, wherein the median pore size of the inorganic closed-cell foam is from 0.1 mm to 5.0 mm, preferably from 0.3 mm to 4.0 mm.

4. The sound absorbing system according to any one of claims 1 to 3, wherein the total porosity of the inorganic closed-cell foam is from 60% to 99%, preferably from 80% to 97%.

5. The sound absorbing system according to any one of claims 1 to 4, wherein the diameters of the individual perforations are from 0.1 mm to 1.5 mm, preferably from 0.2 mm to 1.2 mm.

6. The sound absorbing system according to any one of claims 1 to 5, wherein the spacing between the individual perforations is from 1 mm to 20 mm, preferably from 2 mm to 10 mm, and preferably bigger than the median pore size.

7. The sound absorbing system according to any one of claims 1 to 6, wherein the sound absorbing system comprises two or more layers each comprising a perforated or a non-perforated inorganic closed-cell foam.

8. The sound absorbing system according to any one of claims 1 to 7, wherein the sound absorbing system additionally comprises one or more gaps situated behind the first layer.

9. The sound absorbing system according to any one of claims 1 to 8, wherein the total thickness of the sound absorbing system L or of an individual layer d_{A} is from 5 mm to 300 mm, preferably 10 mm to 60 mm.

10. The sound absorbing system according to any one of claims 1 to 8, wherein the relative thickness of the sound absorbing system is smaller than λ/4, where λ is the wavelength corresponding to the lowest absorption maximum.

11. The sound absorbing system according to any one of claims 1 to 10, wherein the air flow resistivity of an individual layer is from 1,000 Pa_{*}s/m² to 10,000,000 Pa_{*}s/m².

12. The sound absorbing system according to any one of claims 1 to 11, wherein the microporosity of the pore walls is from 20 vol% to 45 vol%.

13. A process for the manufacturing of a layer comprising a perforated inorganic closed-cell foam, comprising the steps of:
mixing
(i) at least one group of inorganic particles which are different from the inorganic binders (iii),
(ii) at least one amphiphilic compound,
(iii) at least one group of inorganic binders selected from calcium sulfate, hydraulic binders such as cements, ceramic particles, latent hydraulic binders, pozzolanic binders, fillers, and mixtures thereof,
(iv) water; and optionally
(v) at least one additive,
foaming the resulting mixture by chemical, physical or mechanical foaming,
casting in form, allowing to solidify,
and in arbitrary order:
optionally cutting to size,
applying perforations,
allowing to fully harden or sintering.

14. The process according to claim 13, wherein the at least one group of inorganic particles is selected from the group consisting of oxides, hydroxides, carbides, nitrides, phosphates, carbonates, silicates, sulfates, and mixtures thereof.

15. The process according to claim 13 or 14, wherein the at least one group of inorganic particles is selected from the group consisting of silica particles, alumina particles, zirconia particles, and CaCO₃ particles, and mixtures thereof.

16. The process according to any one of claims 13 to 15, wherein the at least one group of inorganic particles has a median particle size in the range of from 30 nm to 300 µm.

17. The process according to any one of claims 13 to 16, wherein the at least one amphiphilic compound comprises amphiphilic compounds with at least one polar head group and at least one apolar tail group,
wherein the at least one head group is selected from the group consisting of phosphates, phosphonates, sulfates, sulfonates, alcohols, amines, amides, pyrrolidines, gallates, and carboxylic acids, and wherein the at least one tail group is selected from an aliphatic or an aromatic or a cyclic group with 2 to 8 carbon atoms, wherein the carbon atoms are optionally substituted with one or more, same or different substituents selected from C₁-C₈-alkyl, OH, and NH₂.

18. The process according to any one of claims 13 to 17, wherein the at least one amphiphilic compound comprises amphiphilic compounds with at least one head group selected from the group consisting of carboxylic acids, gallates and amines, and at least one tail group selected from aliphatic groups with 2 to 8 carbon atoms.

19. The process according to any one of claims 13 to 18, wherein the perforations are applied through punching with needles, water jet cutting or laser cutting.

20. Use of a layer comprising a perforated inorganic closed-cell foam for sound absorption.
